Europäisches Patentamt

European Patent Office

Office européen des brevets

(19)

(11) EP 0 801 360 B1

(12) EUROPEAN PATENT SPECIFICATION

(45) Date of publication and mention
of the grant of the patent:
**06.11.2002 Bulletin 2002/45**

(51) Int Cl.7: **G06T 5/40**

(21) Application number: **97301507.6**

(22) Date of filing: **06.03.1997**

(54) **Image quality enhancing method using mean-matching histogram equalization and a circuit therefor**

Bildqualitätverbesserungsverfahren durch Histogramm-Entzerrung mit Mittelwertübereinstimmung und Schaltung dafür

Méthode d'amélioration de qualité d'image utilisant l'égalisation d'histogramme avec correspondance de la moyenne et circuit correspondant

(84) Designated Contracting States:
**DE ES GB**

(30) Priority: **10.04.1996 KR 9610783**
**21.05.1996 KR 9617211**

(43) Date of publication of application:
**15.10.1997 Bulletin 1997/42**

(73) Proprietor: **Samsung Electronics Co., Ltd.**
**Suwon City, Kyungki-do (KR)**

(72) Inventors:
• **Kim, Young-taek**
**Suwon-city, Kyungki-do (KR)**
• **Cho, Yong-hun**
**Dongjak-gu, Seoul (KR)**

(74) Representative: **Chugg, David John**
**Appleyard Lees,**
**15 Clare Road**
**Halifax, West Yorkshire HX1 2HY (GB)**

(56) References cited:
**EP-A- 0 516 084**

EP 0 801 360 B1

**Description**

The present invention relates to a method for enhancing images using mean-matching histogram equalization and a circuit therefor. More particularly, the present invention relates to an image enhancing method for enhancing the contrast while preserving the mean brightness of a given image, and a circuit suitable for the method.

A histogram of gray levels provides an overall description of the appearance of an image. Properly adjusted gray levels for a given image can enhance the appearance or contrast thereof.

Among the many methods for contrast enhancement, the most widely known one is histogram equalization, in which the contrast of a given image is enhanced according to the sample distribution thereof. The method is disclosed in documents: [1] J.S. Lim, "Two-dimensional Signal and Image Processing," Prentice Hall, Englewood Cliffs, New Jersey, 1990, and [2] R.C. Gonzalez and P. Wints, "Digital Image Processing," Addison-Wesley, Reading, Massachusetts, 1977.

Also, the useful applications of the histogram equalization method for medical image processing and radar image processing are disclosed in documents: [3] J. Zimmerman, S. Pizer, E. Staab, E. Perry, W. McCartney and B. Brenton, "Evaluation of the Effectiveness of Adaptive Histogram Equalization for Contrast Enhancement," IEEE Tr. on Medical Imaging, pp. 304-312, Dec. 1988, and [4] Y. Li, W. Wang and D.Y. Yu, "Application of Adaptive Histogram Equalization to X-ray Chest Image," Proc. of the SPIE, pp. 513-514, vol. 2321, 1994.

In general, since histogram equalization causes the dynamic range of an image to be stretched, the density distribution of the resultant image is made flat and the contrast of the image is enhanced as a consequence thereof.

However, such a widely-known feature of the histogram equalization can become a defect in some practical instances. That is, as the output density of the histogram equalization becomes uniform, the mean brightness of an output image approaches the middle gray level value. Actually, for the histogram equalization of an analog image, the mean brightness of the output image is exactly the middle gray level regardless of the mean brightness of the input image. It is obvious that this feature is not desirable in an some real applications. For instance, an image taken at nighttime can appear to be an image taken in the daytime after histogram equalization has been performed. Meanwhile, too dark or too bright image signals result in a low contrast after the equalization.

Another problem of known histogram equalization techniques, that of altering the average brightness of an image to either too dark and causing "flooding" or to too bright causing "blooming" is identified in European Patent 0 516 084, which also proposes a video signal gradation corrector for overcoming this problem. In particular, the document describes normalizations, additions and limiting means for correcting the luminance gradation of an input signal. The aforementioned document describes means for calculating a histogram, means for calculating a cumulative histogram, means for calculating the mean brightness value of an image, and means for brightness correction. The means for brightness correction comprise a circuit whose output depends on the mean luminance level of an input signal and a constant which defines the maximum and a minimum luminance levels included in the cumulative histogram. In this way, the mean value of the corrected output is prevented from becoming either too bright or too dark.

With a view to solving or reducing the above problems, it is an aim of embodiments of the present invention to provide an image enhancing method wherein contrast is enhanced while the mean brightness of a given image is preserved by employing a cumulative density function of the given image in a transform function and controlling the transform function so that the mean gray level of the given image is mapped into itself during histogram equalization.

It is an another aim of embodiments of the present invention to provide an image enhancing method which concurrently enables brightness compensation and contrast enhancement by adding a brightness compensation value to a mean brightness level of an input image according to the mean brightness level and controlling the transform function so that the mean gray level of the input image is mapped into the compensated mean level.

It is yet another aim of embodiments of the present invention to provide an image enhancing circuit wherein contrast is enhanced while the mean brightness of a given image is preserved by employing a cumulative density function of the given image in a transform function and controlling the transform function so that the mean gray level of the given image is mapped into itself during histogram equalization.

It is still yet another aim of embodiments of the present invention to provide an image enhancing circuit which concurrently enables brightness compensation and contrast enhancement by adding a brightness compensation value to a mean brightness level of an input image according to the mean brightness level and controlling the transform function so that the mean gray level of the input image is mapped into the compensated mean level.

In this document, the phrase "field or frame" is taken to define a frame in a time sequence of frames. However, it is to be understood that the teachings of the present application can be generally applied to individual images and also to fields within such images.

According to a first aspect of the invention, there is provided a method for enhancing image by histogram-equalizing image signal represented by a predetermined number of gray levels, said method comprising the steps of: (a) obtaining a cumulative density function of the image signal in a field or frame; (b) calculating a mean level of the image signal in a field or frame; and characterised by (c) equalizing the image signal by mapping each sample of the image signal to a gray level by use of a transform function which employs the cumulative density function to map each input sample of the image signal to a gray level according to cumulative density function values corresponding to the input sample and the mean level, wherein, the transform function maps the mean level into the same level.

The method preferably further comprises a step: (d) delaying the image signal by a field or frame; wherein, a delayed image signal is equalized in said step (c).

The method may further comprise obtaining a gray level distribution of the image signal in a field or frame and then obtaining the cumulative density function in a field or frame based on the gray level distribution; and obtaining a further cumulative density function value corresponding to the mean level based on the cumulative density function. The method may further comprise a subsequent step of: delaying the image signal by a field or frame; wherein, a delayed image signal is equalized in said step of obtaining the further cumulative density function (c) .

In certain embodiments, the method further comprises: obtaining a compensated mean level by adding a brightness compensation value to the mean level according to the mean level of the input image; and equalizing the image signal by mapping each sample of the image signal to a gray level by use of a transform function which employs the cumulative density function, wherein, the transform function maps the mean level into the compensated mean level.

Herein, the method may also comprise the step of: delaying the image signal by a field or frame, wherein, a delayed image signal is equalized in said step of equalizing the image signal.

In preferred embodiments said method further comprises the steps of: obtaining a gray level distribution of the image signal in a field or frame and then obtaining the cumulative density function in a field or frame based on the gray level distribution; (d) obtaining a compensated mean level by adding a brightness compensation value to the mean level according to the mean level of the input image; and (e) equalizing the image signal by mapping each input sample of the image signal to a gray level according cumulative density function values corresponding to the input sample and the mean level, wherein the mean level is mapped into the compensated mean level. There may also be provided a step: (f) of delaying the image signal by a field or frame; wherein, a delayed image signal is equalized in said step (e).

According to a second aspect of the invention, there is provided an image enhancing circuit for histogram-equalizing an image signal represented by a predetermined number of gray levels, said circuit comprising: first calculating means for calculating a mean level of an input image signal in a field or frame; second calculating means for calculating a gray level distribution of the image signal in a field or frame, calculating a cumulative density function in a field or frame based on the gray level distribution, and outputting a cumulative density function value corresponding to each input sample of the image signal and a cumulative density function value of the mean level; and characterised by outputting means for mapping the input sample to a gray level according cumulative density function values corresponding to the input sample and the mean level and outputting a mapped level as an equalized signal, wherein the mean level is mapped into the same level.

The image enhancing circuit may further comprise a picture memory for delaying the image signal by a field or frame to provide said outputting means with a image sample which belongs to a same frame as that from which the cumulative density function is calculated.

The image enhancing circuit may further comprise, a buffer for storing the cumulative density function calculated by said second calculating means, updating by a field or frame, and outputting a cumulative density function values corresponding to the input sample and the mean level.

Said outputting means may comprise: a first mapper for mapping the input sample to a gray level of a first range according to a first transform function which is defined by use of the cumulative density function; a second mapper for mapping the input sample to a gray level of a first range according to a second transform function which is defined by use of the cumulative density function; a comparator for comparing the input sample with the mean level to generate a selection control signal; and a selector for selecting one of output signals from said first mapper and said second mapper according to the selection control signal, wherein said selector selects the output signal from said first mapper when the selection control signal indicates that the input sample is equal to or less than the mean level, and selects the output signal from said second mapper when the selection control signal indicates that the input sample is larger than the mean level.

Said outputting means may comprise: a first mapper for mapping the image sample output by said picture memory to a gray level of a first range according to a first transform function which is defined by use of the cumulative density function; a second mapper for mapping the image sample output by said picture memory to a gray level of a first range according to a second transform function which is defined by use of the cumulative density function; a comparator for comparing the image sample output by said picture memory with the mean level to generate a selection control signal; and a selector for selecting one of output signals from said first mapper and said second mapper according to the selection control signal, wherein said selector selects the output signal from said first mapper when the selection control signal indicates that the image sample output by said picture memory is equal to or less than the mean level, and selects the output signal from said second mapper when the selection control signal indicates that the image sample output by said picture memory is larger than the mean level.

**EP 0 801 360 B1**

Said circuit may further comprise brightness compensating means for adding to the mean level a brightness compensation value calculated by a predetermined compensation function according to the mean level of the input image signal to output a compensated mean level and wherein said outputting means is arranged for mapping the input sample to a gray level according cumulative density function values corresponding to the input sample and the mean level and outputting a mapped level as an equalized signal, wherein the mean level is mapped into the compensated mean level.

Said outputting means may comprise: a first mapper for mapping the input sample to a gray level of a first range according to a first transform function which is defined by use of the cumulative density function; a second mapper for mapping the input sample to a gray level of a first range according to a second transform function which is defined by use of the cumulative density function; a comparator for comparing the input sample with the mean level to generate a selection control signal; and a selector for selecting one of output signals from said first mapper and said second mapper according to the selection control signal, wherein said selector selects the output signal from said first mapper when the selection control signal indicates that the input sample is equal to or less than the mean level, and selects the output signal from said second mapper when the selection control signal indicates that the input sample is larger than the mean level.

Alternatively, said outputting means may comprise: a first mapper for mapping the image sample output by said picture memory to a gray level of a first range according to a first transform function which is defined by use of the cumulative density function; a second mapper for mapping the image sample output by said picture memory to a gray level of a first range according to a second transform function which is defined by use of the cumulative density function; a comparator for comparing the image sample output by said picture memory with the mean level to generate a selection control signal; and a selector for selecting one of output signals from said first mapper and said second mapper according to the selection control signal, wherein said selector selects the output signal from said first mapper when the selection control signal indicates that the image sample output by said picture memory is equal to or less than the mean level, and selects the output signal from said second mapper when the selection control signal indicates that the image sample output by said picture memory is larger than the mean level.

For a better understanding of the invention, and to show how embodiments of the same may be carried into effect, reference will now be made, by way of example, to the accompanying diagrammatic drawings, in which:

Figure 1 is a block diagram of an image enhancing circuit using mean-matching histogram equalization according to a first embodiment of the present invention;

Figure 2 is a block diagram of an image enhancing circuit using mean-matching histogram equalization according to a second embodiment of the present invention;

Figure 3 is a block diagram of an image enhancing circuit using mean-matching histogram equalization according to a third embodiment of the present invention;

Figures 4A and 4B are graphs showing examples of a brightness compensation function applied to the present invention;

Figures 5A and 5B are graphs showing examples of the relation between the mean level of an input image and the mean level compensated by the brightness compensation functions shown in Figures 4A and 4B, respectively; and

Figure 6 is a block diagram of an image enhancing circuit using mean-matching histogram equalization according to a fourth embodiment of the present invention.

The image enhancement method using mean-matching histogram equalization according to the present invention will now be described.

Here, {X} denotes a given image, and $X_m$ denotes the mean brightness level (hereinafter, will be abbreviated as "mean level") of {X}. The given image {X} is composed of L discrete gray levels denoted by {$X_0$, $X_1$,..., $X_{L-1}$}, where $X_0$=0 represents a black level and $X_{L-1}$=1 represents a white level. Also, it is assumed that $X_m \in$ {$X_0$, $X_1$, ..., $X_{L-1}$}.

A probability density function (PDF) for {X} is defined as follows.

$$p(X_k) = \frac{n_k}{n}, \text{ for } k=0,1,..., L-1 \tag{1}$$

4

where, $n_k$ represents the number of occurrences of the gray level $X_k$ in the image $\{X\}$ and n represents the total number of samples in $\{X\}$.

Also, a cumulative density function (CDF) is defined as

$$c(X_k) = \sum_{j=0}^{k} p(X_j) \qquad \cdots\cdots (2)$$

Based on the CDF, the output of a typical histogram equalization, $Y_t$, for the given input sample $X_k$ is given by

$$Y_t = X_0 + (X_{L-1} - X_0)c(X_k)$$

$$= c(X_k) \qquad (3)$$

where, it was assumed that $X_0=0$ (Black) and $X_{L-1}=1$ (white).

The biggest problem occurring during the histogram equalization is that the mean brightness level of an output signal can be drastically changed from that of an input signal depending on the CDF used as a transform function.

To overcome such a drawback, in a first method of the present invention, the following mapping operation which is based on the mean of the input image combined with the CDF is proposed.

$$Y_H = \begin{cases} \dfrac{c(X_k)}{c(X_m)} X_m, & \text{if } X_k \leq X_m \\[4mm] X_m + (X_{L-1} - X_m)\dfrac{c(X_k)-c(X_m)}{1-c(X_m)}, & \text{if } X_k > X_m \end{cases} \qquad \cdots\cdots (4)$$

That is, the samples which are equal to or less than the mean level $X_m$ are mapped into gray levels of from $X_0$ to $X_m$ ($X_0$, $X_m$) by $\dfrac{c(X_k)}{c(X_m)} X_m$, and the samples greater than the mean level are mapped into gray levels of from $X_m$ to $X_{L-1}$ ($X_m$, $X_{L-1}$) by $X_m + (X_{L-1} - X_m)\dfrac{c(X_k)-c(X_m)}{1-c(X_m)}$. It is noted that $X_m$ is mapped into $X_m$ in the expression (4).

Thus, when a given image is histogram-equalized according to a cumulative density function, the mean brightness of the given image is prevented from being changed due to histogram equalization by modifying a transform function according to the equation (4) so that the mean level of the given image is mapped into itself. Such a method is referred to, in the present invention, as a mean-matching histogram equalization.

In a second method according to the present invention, the following mapping operation is proposed, which can also compensate the level of brightness when the mean brightness of a given input image signal is excessively dark or bright.

$$Y_H = \begin{cases} \dfrac{c(X_K)}{c(X_m)} B_m, & \text{if } X_k \leq X_m \\[4mm] B_m + \dfrac{c(X_k)-c(X_m)}{1-c(X_m)} (X_{L-1} - B_m), & \text{if } X_k > X_m \end{cases} \qquad \cdots\cdots(5)$$

where,

$$B_m = X_m + \Delta \qquad (6)$$

Here, $B_m$ is a compensated mean level and $\Delta$ is a brightness compensation value which is preset by use of a predetermined compensation function according to the brightness level. Thus, the compensated mean level $B_m$ results from adding the brightness compensation value $\Delta$ to the mean level $X_m$. At this time, we also assume that $B_m \in \{X_0, X_1,..., X_{L-1}\}$.

Thus, the equalized output $Y_H$ becomes brighter when the brightness compensation value is greater than 0 ($\Delta>0$), and the equalized output $Y_H$ becomes darker when the brightness compensation value is less than 0 ($\Delta<0$). As $\Delta$ is increased, the dynamic range of a lower gray level portion of the image is enhanced, and as $\Delta$ is decreased, the dynamic range of an upper gray level portion is enhanced. The compensated mean level $B_m$ appropriately compensated according the mean level $X_m$ of the given image signal, that is, the brightness and darkness of the image, enhances greatly the quality of the input image along with the mean-matching histogram equalization.

As a consequence, according to the equation (5), the input samples which are equal to or less than the mean $X_m$ are mapped into gray levels of from $X_0$ to $B_m$ ($X_0$, $B_m$) by $\frac{c(X_k)}{c(X_m)}B_m$ and the samples greater than the mean $X_m$ are mapped into gray levels of from $B_m$ to $X_{L-1}$ ($B_m$, $X_{L-1}$) by $B_m + \frac{c(X_k)-c(X_m)}{1-c(X_m)}(X_{L-1}-B_m)$. It is noted that $X_m$ is mapped into $B_m$ in expression (5).

Thus, when a given image is histogram-equalized according to a cumulative density function, the mean brightness of the given image is compensated, while contrast is also enhanced, by modifying a transform function according to the equation (5) so that the mean level of the given image is mapped into the compensated mean level.

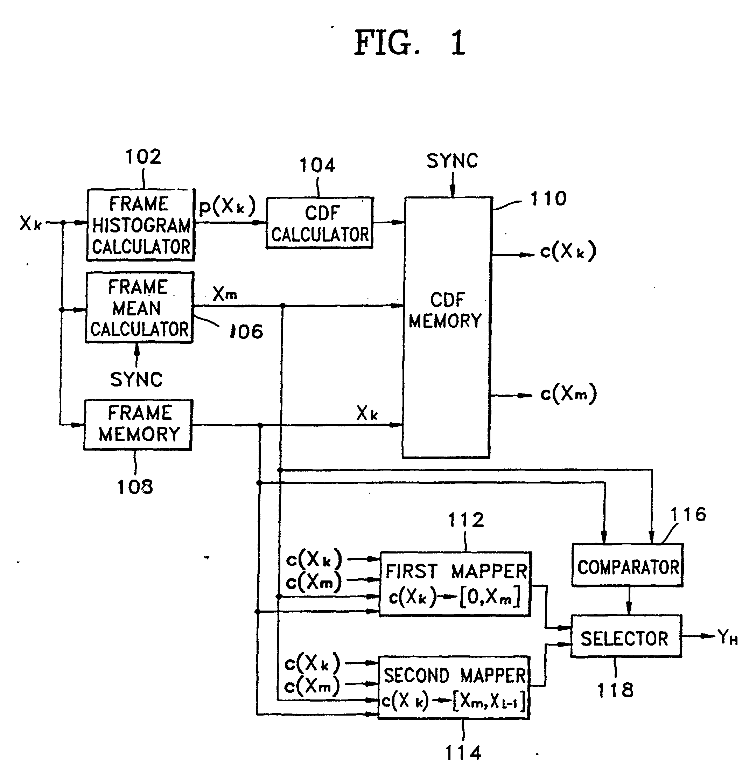

Referring to Figures 1-6, an embodiment of an image enhancement circuit using the mean-matching histogram equalization will now be described.

Figure 1 is a block diagram of an image enhancement circuit using the mean-matching histogram equalization according to a first embodiment of the present invention.

In Figure 1, a frame histogram calculator 102 calculates the probability density function $p(X_k)$ which represents a gray level distribution in the input image {X} according to the equation (1) by a field or frame. At this stage, a frame is used for the picture unit. However, a field may be used for the picture unit alternatively.

A cumulative density function (CDF) calculator 104 calculates the cumulative density function $c(X_k)$ according to the equation (2) based on the probability density function $p(X_k)$ of one frame calculated by the frame histogram calculator 102.

A frame mean calculator 106 calculates the mean level $X_m$ of the one frame input image {X} in a unit of one frame and outputs the mean level $X_m$ in a unit of a frame to a CDF memory 110, a first and a second mapper 112 and 114, and a comparator 116 according to a synchronization signal (here, a frame sync signal SYNC).

A frame memory 108 stores the input image {X} by a frame unit. Since the cumulative density function $c(X_k)$ calculated by the CDF calculator 104 is the cumulative density function of an image delayed by one frame compared with the currently input image {X}, the input image {X} is delayed by one frame by the frame memory 108 so that an image signal of the frame corresponding to the cumulative density function $c(X_k)$ is input to the first and the second mappers 112 and 114.

The CDF memory 110 stores the cumulative density function $c(X_k)$ calculated by the CDF calculator 104 by a unit of one frame, updates the stored values according to the synchronization signal SYNC, and outputs the cumulative 'density function value $c(X_k)$ corresponding to a sample $X_k$ output by the frame memory 108 and the cumulative density function value $c(X_m)$ corresponding to the mean level $X_m$ output by frame mean calculator 106. At this stage, the CDF memory 110 is used as a buffer.

The first mapper 112 receives the cumulative density function values $c(X_k)$ and $c(X_m)$ from the CDF memory 110, the mean level $X_m$ from the frame mean calculator 106 and the one-frame delayed input sample $X_k$ from the frame memory 108, and maps the one-frame delayed input sample $X_k$ to a gray level of from $X_0$ to $X_m$ according to the first expression in the equation(4) to output an enhanced signal $Y_H$.

The second mapper 114 receives the cumulative density function values $c(X_k)$ and $c(X_m)$ from the CDF memory 110, the mean level $X_m$ from the frame mean calculator 106 and the one-frame delayed input sample $X_k$ from the frame memory 108, and maps the one-frame delayed input sample $X_k$ to a gray level of from $X_m$ to $X_{L-1}$ according to the second expression in the equation (4) to output an enhanced signal $Y_H$.

The comparator 116 compares the input sample $X_k$ output by the frame memory 108 with the mean level $X_m$ output by the frame mean calculator 104, and outputs a selection control signal according to the compared result.

A selector 118 selects the signal output by the first mapper 112 or that by the second mapper 114 in accordance with the selection control signal. Specifically, the selector 118 selects the signal output by the first mapper 112 in case that the selection control signal indicates that the input sample $X_k$ is less than or equal to the mean level $X_m$. Meanwhile, the selector 118 selects the signal output by the second mapper 114 in the case that the selection control signal indicates that the input sample $X_k$ is greater than the mean level $X_m$. Then, the selector 118 outputs the selected signal as the output image $Y_H$ in expression (4).

In embodiments of the present invention, the histogram calculator 102 and the CDF calculator 104 can be incorporated into a single block for calculating the gray level distribution and calculating the CDF also according to the gray level distribution in a field or frame with respect to the input image {X}.

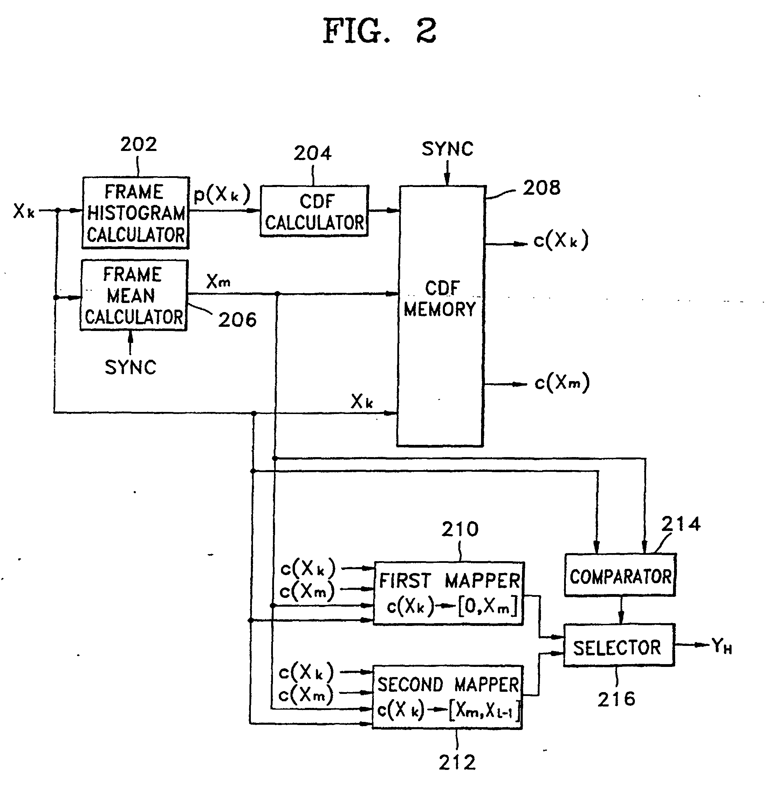

Figure 2 is a block diagram of an image enhancement circuit using the mean-matching histogram equalization according to a second embodiment of the present invention.

In Figure 2, a frame histogram calculator 202 calculates the probability density function $p(X_k)$ which represents a gray level distribution in the input image {X} according to the equation (1) by a field or frame.

A CDF calculator 204 calculates the cumulative density function $c(X_k)$ according to the equation (2) based on the probability density function $p(X_k)$ of one frame calculated by the frame histogram calculator 202.

A frame mean calculator 206 calculates the mean level $X_m$ of the input image {X} in a unit of one frame and outputs the mean level $X_m$ to a CDF memory 208, a first and a second mappers 210 and 212, and a comparator 214 according to a frame sync signal SYNC.

The CDF memory 208 stores the cumulative density function value $c(X_k)$, for k=0, 1,..., L-1 calculated by CDF calculator 204 by a unit of one frame, updates the stored values according to the frame sync signal SYNC, and outputs the cumulative density function value $c(X_k)$ corresponding to an input sample $X_k$ and the cumulative density function value $c(X_m)$ corresponding to the mean level $X_m$ output by the frame mean calculator 206.

The first mapper 210 receives the cumulative density function values $c(X_k)$ and $c(X_m)$ from the CDF memory 208, the mean level $X_m$ from the frame mean calculator 206, and the input sample $X_k$, and then maps the input sample $X_k$ to a gray level of from $X_0$ to $X_m$ according to the first expression in the equation (4) to thereby output an enhanced signal $Y_H$.

The second mapper 212 receives the cumulative density function values $c(X_k)$ and $c(X_m)$ from the CDF memory 208, the mean level $X_m$ from the frame mean calculator 206, and the input sample $X_k$, and then maps the input sample $X_k$ to a gray level of from $X_m$ to $X_{L-1}$ according to the second expression in the equation (4) to output an enhanced signal $Y_H$.

The comparator 214 compares the input sample $X_k$ with the mean level $X_m$ output by the frame mean calculator 206, and outputs a selection control signal.

A selector 216 selects the signal output by the first mapper 210 or that by the second mapper 212 in accordance with the selection control signal. Specifically, the selector 216 selects the signal output by the first mapper 210 in case that the selection control signal indicates that the input sample $X_k$ is less than or equal to the mean level $X_m$. Meanwhile, the selector 216 selects the signal output by the second mapper 212 in the case that the selection control signal indicates that the input sample $X_k$ is greater than the mean level $X_m$.

In this embodiment of Figure 2, a frame memory has been omitted, compared with the first embodiment of the present invention of Figure 1, considering the feature that there exists a high correlation between the neighbouring frames. Thus, the sample $X_k$ input to the first and the second mappers 210 and 212 belong to a frame next to the one to which the output signals of the CDF memory 208 is related. Consequently, the hardware is reduced.

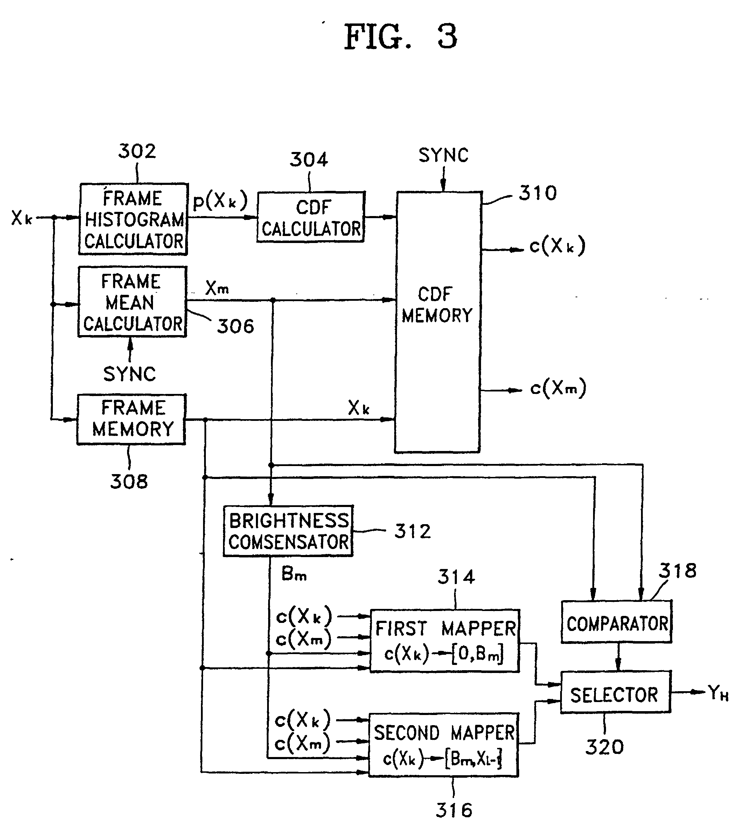

Figure 3 illustrates a third embodiment of an image enhancing circuit using mean-matching histogram equalization according to the present invention. The components of the circuit shown in Figure 3 are similar to the components of the circuit shown in Figure 1 except for a brightness compensator 312, and a first and a second mappers 314 and 316. Thus, the description will be focused on the brightness compensator 312, and the first and the second mappers 314 and 316.

In Figure 3, the brightness compensator 312 receives the mean level $X_m$ output by a frame mean calculator 306, adds a brightness compensation value ($\Delta$) corresponding to the mean brightness of an input image, as described in the equation (6), and outputs the compensated mean level $B_m$.

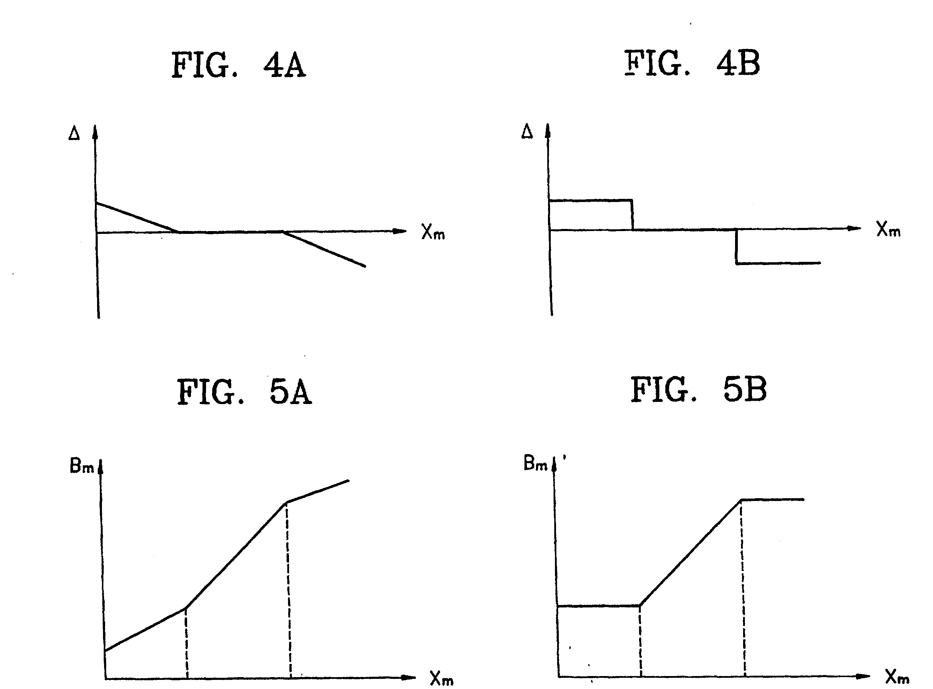

The brightness compensation value $\Delta$ is determined by use of a predetermined compensation function such as ones shown in Figures 4A and 4B. However, the compensation functions shown in Figures 4A and 4B are not more than exemplary ones, and other functions of different shape can be contemplated as well.

The brightness of the equalized output is controlled the brightness compensation value according to the compensation function as shown in Figures 4A and 4B. Specifically, when the mean level $X_m$ of the input image is very low, i.e., for a quite dark image, the equalized output becomes brighter by the mean-matching histogram equalization method of the present invention since a brightness compensation value $\Delta$ greater than "0" is added to the mean level $X_m$.

Meanwhile, when the mean level $X_m$ of the input image is very high, i.e., for a quite bright image, the equalized output becomes darker by the mean-matching histogram equalization method of the present invention since a brightness compensation value $\Delta$ less than "0" is added to the mean level $X_m$. Accordingly, the compensated mean level $B_m$ compensated by a suitable brightness compensation value $\Delta$ according to the mean level $X_m$ drastically improves the quality of the input image.

Figures 5A and 5B show the relation between the compensated mean level $B_m$ compensated by a compensated brightness compensation value $\Delta$ in accordance with the brightness compensation function shown in Figures 4A and 4B and the mean level $X_m$ of the input image.

The first mapper 314 receives the cumulative density function values $c(X_k)$ and $c(X_m)$ from a CDF memory 310, the compensated mean level $B_m$ from the brightness compensator 312 and the input sample $(X_k)$ from a frame

memory 308, and maps the input sample ($X_k$) to a gray level of from $X_0$ to $B_m$ according to the first expression in the equation (5) to output an enhanced signal $Y_H$.

The second mapper 316 receives the cumulative density function values $c(X_k)$ and $c(X_m)$ from the CDF memory 310, the compensated mean level $B_m$ from the brightness compensator 312 and the input sample $X_k$ from the frame memory 308, and maps the input sample $X_k$ to a gray level of from $B_m$ to $X_{L-1}$ according to the second expression in the equation (5) to output an enhanced signal $Y_H$.

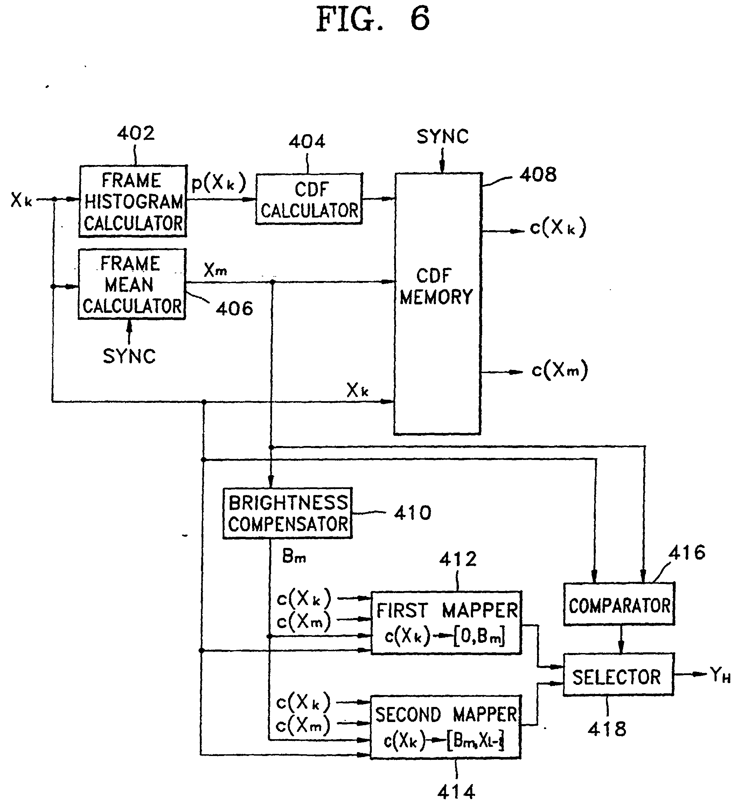

Figure 6 illustrates a fourth embodiment of an image enhancing circuit using mean-matching histogram equalization according to the present invention. The components of the circuit shown in Figure 6 are similar to the components of the circuit shown in Figure 2 except for a brightness compensator 410, and a first and a second mappers 412 and 414. Thus, the description will be focused on the brightness compensator 410, and the first and the second mappers 412 and 414.

In Figure 6, the brightness compensator 410 receives the mean level $X_m$ output by a frame mean calculator 406, adds a brightness compensation value ($\Delta$) corresponding to the mean brightness of an input image, as described in the equation (6), and outputs the compensated mean level $B_m$.

The first mapper 412 receives the cumulative density function values $c(X_k)$ and $c(X_m)$ from a CDF memory 408, the compensated mean level $B_m$ from the brightness compensator 410 and the input sample $X_k$, and maps the input sample $X_k$ to a gray level of from $X_0$ to $B_m$ according to the first expression in the equation (5) to output an enhanced signal $Y_H$.

The second mapper 414 receives the cumulative density function values $c(X_k)$ and $c(X_m)$ from the CDF memory 408, the compensated mean level $B_m$ from the brightness compensator 410 and the input sample $X_k$, and maps the input sample $X_k$ to a gray level of from $B_m$ to $X_{L-1}$ according to the second expression in the equation (5) to output an enhanced signal $Y_H$.

As was the case for the image enhancing circuit of Figure 2, the hardware is reduced by omitting the frame memory considering the characteristics that there exists a high correlation between the neighboring frames.

As described above, in embodiments of the present invention, a transform function is controlled to allow the mean gray level of the given image to be mapped into itself when the histogram equalization is performed using the cumulative density function of the given image signal as the transform function, so that the mean brightness of a given image is preserved while contrast is enhanced.

Also, embodiments of the present invention can achieve the brightness compensation and contrast enhancement concurrently by controlling the transform function to allow the mean gray level of the given image to be mapped into the compensated mean level which is compensated according to the brightness thereof when the histogram equalization is performed in accordance with the cumulative density function of the given image signal. Furthermore, the image quality can be dramatically improved by enhancing the contrast of too dark or too bright input image signals.

## Claims

1. A method for enhancing image by histogram-equalizing image signal represented by a predetermined number of gray levels, said method comprising the steps of:

    (a) obtaining a cumulative density function of the image signal in a field or frame;

    (b) calculating a mean level of the image signal in a field or frame; and **characterised by**

    (c) equalizing the image signal by mapping each sample of the image signal to a gray level by use of a transform function which employs the cumulative density function to map each input sample of the image signal to a gray level according to cumulative density function values corresponding to the input sample and the mean level, wherein, the transform function maps the mean level into the same level.

2. A method for enhancing image as claimed in claim 1, further comprising a step:

    (d) delaying the image signal by a field or frame;

    wherein, a delayed image signal is equalized in said step (c).

3. A method according to claim 1 further comprising obtaining a gray level distribution of the image signal in a field or frame and then obtaining the cumulative density function in a field or frame based on the gray level distribution; and obtaining a further cumulative density function value corresponding to the mean level based on the cumulative density function.

**4.** A method for enhancing image as claimed in claim 3, further comprising a subsequent step of: delaying the image signal by a field or frame;

wherein, a delayed image signal is equalized in said step of obtaining the further cumulative density function (c).

**5.** A method according to claim 1, wherein the method further comprises: obtaining a compensated mean level by adding a brightness compensation value to the mean level according to the mean level of the input image; and equalizing the image signal by mapping each sample of the image signal to a gray level by use of a transform function which employs the cumulative density function, wherein, the transform function maps the mean level into the compensated mean level.

**6.** A method for enhancing image as claimed in claim 5, further comprising the step of: delaying the image signal by a field or frame, wherein, a delayed image signal is equalized in said step of equalizing the image signal.

**7.** A method according to claim 1, said method further comprising the steps of:

obtaining a gray level distribution of the image signal in a field or frame and then obtaining the cumulative density function in a field or frame based on the gray level distribution;

(d) obtaining a compensated mean level by adding a brightness compensation value to the mean level according to the mean level of the input image; and

(e) equalizing the image signal by mapping each input sample of the image signal to a gray level according cumulative density function values corresponding to the input sample and the mean level, wherein the mean level is mapped into the compensated mean level.

**8.** A method for enhancing image as claimed in claim 7, further comprising a step:

(f) delaying the image signal by a field or frame;

wherein, a delayed image signal is equalized in said step (e).

**9.** An image enhancing circuit for histogram-equalizing an image signal represented by a predetermined number of gray levels, said circuit comprising:

first calculating means (106; 206; 306; 406) for calculating a mean level of an input image signal in a field or frame;

second calculating means (102, 104; 202, 204; 302, 304; 402, 404) for calculating a gray level distribution of the image signal in a field or frame, calculating a cumulative density function in a field or frame based on the gray level distribution, and outputting a cumulative density function value corresponding to each input sample of the image signal and a cumulative density function value of the mean level; and **characterised by**

outputting means (112, 114, 116, 118; 210 - 216; 314 - 320; 412 - 418) for mapping the input sample to a gray level according to cumulative density function values corresponding to the input sample and the mean level and outputting a mapped level as an equalized signal, wherein the mean level is mapped into the same level.

**10.** An image enhancing circuit as claimed in claim 9, further comprising a picture memory (108; 308) for delaying the image signal by a field or frame to provide said outputting means (112 - 118; 314 - 320) with a image sample which belongs to a same frame as that from which the cumulative density function is calculated.

**11.** An image enhancing circuit as claimed in claim 9 or 10, further comprising a buffer (110; 208; 310; 408) for storing the cumulative density function calculated by said second calculating means (102, 104; 202, 204; 302, 304; 402, 404), updating by a field or frame, and outputting a cumulative density function values corresponding to the input sample and the mean level.

**12.** An image enhancing circuit as claimed in claim 9 or claim 11 as dependent thereon, wherein said outputting means comprises:

a first mapper (210; 412) for mapping the input sample to a gray level of a first range according to a first transform function which is defined by use of the cumulative density function;

a second mapper (212; 414) for mapping the input sample to a gray level of a first range according to a second transform function which is defined by use of the cumulative density function;

a comparator (214; 416) for comparing the input sample with the mean level to generate a selection control signal; and

a selector (216; 418) for selecting one of output signals from said first mapper (210; 412) and said second mapper (212; 414) according to the selection control signal, wherein said selector (216; 418) selects the output signal from said first mapper (210; 412) when the selection control signal indicates that the input sample is equal to or less than the mean level, and selects the output signal from said second mapper (212; 414) when the selection control signal indicates that the input sample is larger than the mean level.

**13.** An image enhancing circuit as claimed in claim 10 or 11 as dependent thereon, wherein said outputting means comprises:

a first mapper (112; 314) for mapping the image sample output by said picture memory to a gray level of a first range according to a first transform function which is defined by use of the cumulative density function;

a second mapper (114; 316) for mapping the image sample output by said picture memory (108; 308) to a gray level of a first range according to a second transform function which is defined by use of the cumulative density function;

a comparator (116; 318) for comparing the image sample output by said picture memory (108; 308) with the mean level to generate a selection control signal; and

a selector (118; 320) for selecting one of output signals from said first mapper and said second mapper according to the selection control signal, wherein said selector selects the output signal from said first mapper when the selection control signal indicates that the image sample output by said picture memory (108; 308) is equal to or less than the mean level, and selects the output signal from said second mapper when the selection control signal indicates that the image sample output by said picture memory (108; 308) is larger than the mean level.

**14.** An image enhancing circuit according to claims 9, 10 or 11 for histogram-equalizing, said circuit further comprising additionally,
brightness compensating means (312; 410) for adding to the mean level a brightness compensation value calculated by a predetermined compensation function according to the mean level of the input image signal to output a compensated mean level and wherein said outputting means (314 - 320; 412 - 418) is arranged for mapping the input sample to a gray level according cumulative density function values corresponding to the input sample and the mean level and outputting a mapped level as an equalized signal, wherein the mean level is mapped into the compensated mean level.

**15.** An image enhancing circuit as claimed in claim 14, wherein said outputting means comprises:

a first mapper (412) for mapping the input sample to a gray level of a first range according to a first transform function which is defined by use of the cumulative density function;

a second mapper (414) for mapping the input sample to a gray level of a first range according to a second transform function which is defined by use of the cumulative density function;

a comparator (416) for comparing the input sample with the mean level to generate a selection control signal; and

a selector (418) for selecting one of output signals from said first mapper (412) and said second mapper (414) according to the selection control signal, wherein said selector selects the output signal from said first mapper (412) when the selection control signal indicates that the input sample is equal to or less than the mean level, and selects the output signal from said second mapper (414) when the selection control signal indicates that the input sample is larger than the mean level.

16. An image enhancing circuit as claimed in claim 14, wherein said outputting means comprises:

a first mapper (314) for mapping the image sample output by said picture memory (308) to a gray level of a first range according to a first transform function which is defined by use of the cumulative density function;

a second mapper (316) for mapping the image sample output by said picture memory (308) to a gray level of a first range according to a second transform function which is defined by use of the cumulative density function;

a comparator (318) for comparing the image sample output by said picture memory with the mean level to generate a selection control signal; and

a selector (320) for selecting one of output signals from said first mapper and said second mapper according to the selection control signal, wherein said selector selects the output signal from said first mapper when the selection control signal indicates that the image sample output by said picture memory (308) is equal to or less than the mean level, and selects the output signal from said second mapper (316) when the selection control signal indicates that the image sample output by said picture memory (308) is larger than the mean level.

**Patentansprüche**

1. Verfahren zum Verstärken eines Bilds durch histogramm-mäßiges Ausgleichen eines Bildsignals, dargestellt durch eine vorbestimmte Anzahl von Grau-Pegeln, wobei das Verfahren die Schritte aufweist:

(a) Erhalten einer kumulativen Dichtefunktion des Bildsignals in einem Feld oder Einzelbild;
(b) Berechnen eines durchschnittlichen Pegels des Bildsignals in einem Feld oder Einzelbild; und **gekennzeichnet durch**
(c) Ausgleichen des Bildsignals **durch** Auflisten jeder Abtastung des Bildsignals zu einem Graupegel unter Verwendung einer Transformationsfunktion, die die kumulative Dichtefunktion einsetzt, um jede Eingabe-Abtastung des Bildsignals zu einem Graupegel gemäß kumulativen Dichtefunktionswerten entsprechend zu der Eingabe-Abtastung und dem durchschnittlichen Pegel aufzulisten, wobei die Transformationsfunktion den durchschnittlichen Pegel in denselben Pegel hinein auflistet.

2. Verfahren zum Verstärken eines Bilds nach Anspruch 1, das weiterhin einen Schritt aufweist:

(d) Verzögern des Bildsignals um ein Feld oder ein Einzelbild;

wobei ein verzögertes Bildsignal in dem Schritt (c) ausgeglichen wird.

3. Verfahren nach Anspruch 1, das weiterhin Erhalten einer Grau-Pegel-Verteilung des Bildsignals in einem Feld oder Einzelbild und dann Erhalten der kumulativen Dichtefunktion in einem Feld oder Einzelbild basierend auf der Grau-Pegel-Verteilung; und Erhalten eines weiteren, kumulativen Dichtefunktionswerts entsprechend zu dem durchschnittlichen Pegel basierend auf der kumulativen Dichtefunktion; aufweist.

4. Verfahren zum Verstärken eines Bilds nach Anspruch 3, das weiterhin einen darauffolgenden Schritt aufweist von: Verzögern des Bildsignals um ein Feld oder ein Einzelbild; wobei ein verzögertes Bildsignal in dem Schritt eines Erhaltens der weiteren, kumulativen Dichtefunktion (c) ausgeglichen wird.

5. Verfahren nach Anspruch 1, wobei das Verfahren weiterhin aufweist Erhalten eines kompensierten, durchschnittlichen Pegels durch Hinzufügen eines Helligkeitskompensationswerts zu dem durchschnittlichen Pegel gemäß dem durchschnittlichen Pegel des Eingabebilds; und Ausgleichen des Bildsignals durch Auflisten jeder Abtastung des Bildsignals zu einem Graupegel unter Verwendung einer Transformationsfunktion, die die kumulative Dichtefunktion einsetzt, wobei die Transformationsfunktion den durchschnittlichen Pegel in den kompensierten, durchschnittlichen Pegel hinein auflistet.

**6.** Verfahren zum Verstärken eines Bilds nach Anspruch 5, das weiterhin den Schritt aufweist von: Verzögern des Bildsignals um ein Feld oder ein Einzelbild, wobei ein verzögertes Bildsignal in dem Schritt eines Ausgleichens des Bildsignals ausgeglichen wird.

**7.** Verfahren nach Anspruch 1, wobei das Verfahren weiterhin die Schritte aufweist von:

Erhalten einer Grau-Pegel-Verteilung des Bildsignals in einem Feld oder Einzelbild und dann Erhalten der kumulativen Dichtefunktion in einem Feld oder Einzelbild basierend auf der Grau-Pegel-Verteilung;
(d) Erhalten eines kompensierten, durchschnittlichen Pegels durch Hinzufügen eines Helligkeitskompensationswerts zu dem durchschnittlichen Pegel gemäß dem durchschnittlichen Pegel des Eingabebilds; und
(e) Ausgleichen des Bildsignals durch Auflisten jeder Eingabe-Abtastung des Bildsignals zu einem Graupegel gemäß kumulativen Dichtefunktionswerten entsprechend zu der Eingabe-Abtastung und dem durchschnittlichen Pegel, wobei der durchschnittliche Pegel in den kompensierten, durchschnittlichen Pegel hinein aufgelistet wird.

**8.** Verfahren zum Verstärken eines Bilds nach Anspruch 7, das weiterhin einen Schritt aufweist:

(f) Verzögern des Bildsignals um ein Feld oder ein Einzelbild;

wobei ein verzögertes Bildsignal in dem Schritt (e) ausgeglichen wird.

**9.** Bildverstärkungsschaltung für ein histogramm-mäßiges Ausgleichen eines Bildsignals, dargestellt durch eine vorbestimmte Anzahl von Grau-Pegeln, wobei die Schaltung aufweist:

eine erste Berechnungseinrichtung (106; 206; 306; 406) zum Berechnen eines durchschnittlichen Pegels eines Eingabe-Bild-Signals in einem Feld oder Einzelbild;
eine zweite Berechnungseinrichtung (102, 104; 202, 204; 302, 304; 402, 404) zum Berechnen einer Grau-Pegel-Verteilung des Bildsignals in einem Feld oder Einzelbild, Berechnen einer kumulativen Dichtefunktion in einem Feld oder Einzelbild basierend auf der Grau-Pegel-Verteilung und Ausgeben eines kumulativen Dichtefunktionswerts entsprechend zu jeder Eingabe-Abtastung des Bildsignals und eines kumulativen Dichtefunktionswerts des durchschnittlichen Pegels; und **gekennzeichnet durch**
eine Ausgabeeinrichtung (112, 114, 116, 118; 210-216; 314-320; 412 - 418) zum Auflisten der Eingabe-Abtastung zu einem Grau-Pegel gemäß kumulativen Dichtefunktionswerten entsprechend zu der Eingabe-Abtastung und dem durchschnittlichen Pegel und Ausgeben eines aufgelisteten Pegels als ein ausgeglichenes Signal, wobei der durchschnittliche Pegel in denselben Pegel hinein aufgelistet wird.

**10.** Bildverstärkungsschaltung nach Anspruch 9, die weiterhin einen Bildspeicher (108; 308) zum Verzögern des Bildsignals um ein Feld oder ein Einzelbild aufweist, um die Ausgabeeinrichtung (112 - 118; 314 - 320) mit einer Bildabtastung zu versehen, die zu demselben Einzelbild wie dasjenige gehört, von dem die kumulative Dichtefunktion berechnet ist.

**11.** Bildverstärkungsschaltung nach Anspruch 9 oder 10, die weiterhin einen Puffer (110; 208; 310; 408) zum Speichern der kumulativen Dichtefunktion, berechnet durch die zweite Berechnungseinrichtung (102, 104; 202, 204; 302, 304; 402, 404), zum Aktualisieren durch ein Feld oder ein Einzelbild und zum Ausgeben von kumulativen Dichtefunktionswerten entsprechend zu der Eingabe-Abtastung und dem durchschnittlichen Pegel; aufweist.

**12.** Bildverstärkungsschaltung nach Anspruch 9 oder Anspruch 11, wenn er davon abhängig ist, wobei die Ausgabeeinrichtung aufweist:

eine erste Auflistungseinrichtung (210; 412) zum Auflisten der Eingabe-Abtastung zu einem Grau-Pegel eines ersten Bereichs gemäß einer ersten Transformationsfunktion, die durch Verwendung der kumulativen Dichtefunktion definiert ist;
eine zweite Auflistungseinrichtung (212; 414) zum Auflisten der Eingabe-Abtastung zu einem Grau-Pegel eines ersten Bereichs gemäß einer zweiten Transformationsfunktion, die durch Verwendung der kumulativen Dichtefunktion definiert ist;

einen Komparator (214; 416) zum Vergleichen der Eingabe-Abtastung mit dem durchschnittlichen Pegel, um ein Auswahlsteuersignal zu erzeugen; und

einen Selektor (216; 418) zum Auswählen eines von Ausgabesignalen von der ersten Auflistungseinrichtung (210; 412) und der zweiten Auflistungseinrichtung (212; 414) gemäß dem Auswahlsteuersignal, wobei der Selektor (216; 418) das Ausgabesignal von der ersten Auflistungseinrichtung (210; 412) auswählt, wenn das Auswahlsteuersignat anzeigt, dass die Eingabe-Abtastung gleich zu oder geringer als der durchschnittliche Pegel ist, und das Ausgabesignal von der zweiten Auflistungseinrichtung (212; 414) auswählt, wenn das Auswahlsteuersignal anzeigt, dass die Eingabe-Abtastung größer als der durchschnittliche Pegel ist.

13. Bildverstärkungsschaltung nach Anspruch 10 oder 11, wenn er davon abhängig ist,
wobei die Ausgabeeinrichtung aufweist:

eine erste Auflistungseinrichtung (112; 314) zum Auflisten der Bild-Abtastungs-Ausgabe durch den Bildspeicher zu einem Grau-Pegel eines ersten Bereichs gemäß einer ersten Transformationsfunktion, die durch Verwendung der kumulativen Dichtefunktion definiert ist;

eine zweite Auflistungseinrichtung (114; 316) zum Auflisten der Bild-Abtastungs-Ausgabe durch den Bildspeicher (108; 308) zu einem Grau-Pegel eines ersten Bereichs gemäß einer zweiten Transformationsfunktion, die durch Verwendung der kumulativen Dichtefunktion definiert ist;

einen Komparator (116; 318) zum Vergleichen der Bild-Abtastungs-Ausgabe durch den Bildspeicher (108; 308) mit dem durchschnittlichen Pegel, um ein Auswahlsteuersignal zu erzeugen; und

einen Selektor (118; 320) zum Auswählen eines von Ausgabesignalen von der ersten Auf(istungseinrichtung und der zweiten Auflistungseinrichtung gemäß dem Auswahlsteuersignal, wobei der Selektor das Ausgabesignal von der ersten Auflistungseinrichtung auswählt, wenn das Auswahlsteuersignal anzeigt, dass die Bild-Abtastungs-Ausgabe durch den Bildspeicher (108; 308) gleich zu oder geringer als der durchschnittliche Pegel ist, und das Ausgabesignal von der zweiten Auflistungseinrichtung auswählt, wenn das Auswahlsteuersignal anzeigt, dass die Bild-Abtastungs-Ausgabe durch den Bildspeicher (108; 308) größer als der durchschnittliche Pegel ist.

14. Bildverstärkungsschaltung nach Anspruch 9, 10 oder 11, für einen Histogramm-Ausgleich, wobei die Schaltung weiterhin zusätzlich aufweist:

eine Helligkeits-Kompensationseinrichtung (312; 410) zum Hinzufügen zu dem durchschnittlichen Pegel eines Helligkeits-Kompensations-Werts, berechnet durch eine vorbestimmte Kompensationsfunktion, gemäß dem durchschnittlichen Pegel des Eingabe-Bild-Signals, um einen kompensierten, durchschnittlichen Pegel auszugeben, und wobei die Ausgabeeinrichtung (314 - 320; 412 -418) zum Auflisten der Eingabe-Abtastung zu einem Graupegel gemäß kumulativen Dichtefunktionswerten entsprechend zu der Eingabe-Abtastung und dem durchschnittlichen Pegel und zum Ausgeben eines aufgelisteten Pegels als ein egalisiertes Signal angeordnet ist, wobei der durchschnittliche Pegel in den kompensierten Durchschnittspegel hinein aufgelistet wird.

15. Bildverstärkungsschaltung nach Anspruch 14, wobei die Ausgabeeinrichtung aufweist:

eine erste Auflistungseinrichtung (412) zum Auflisten der Eingabe-Abtastung zu einem Grau-Pegel eines ersten Bereichs gemäß einer ersten Transformationsfunktion, die durch Verwendung der kumulativen Dichtefunktion definiert ist;

eine zweite Auflistungseinrichtung (414) zum Auflisten der Eingabe-Abtastung zu einem Graupegel eines ersten Bereichs gemäß einer zweiten Transformationsfunktion, die durch Verwendung der kumulativen Dichtefunktion definiert ist;

einen Komparator (416) zum Vergleichen der Eingabe-Abtastung mit dem durchschnittlichen Pegel, um ein Auswahlsteuersignal zu erzeugen; und

einen Selektor (418) zum Auswählen eines von Ausgabesignalen von der ersten Auflistungseinrichtung (412) und der zweiten Auflistungseinrichtung (414) gemäß dem Auswahisteuersignal, wobei der Selektor das Ausgabesignal von der ersten Auflistungseinrichtung (412) auswählt, wenn das Auswahlsteuersignal anzeigt, dass die Eingabe-Abtastung gleich zu oder geringer als der durchschnittliche Pegel ist, und das Ausgabesignal von der zweiten Auflistungseinrichtung (414) auswählt, wenn das Auswahlsteuersignal anzeigt, dass die Eingabe-Abtastung größer als der durchschnittliche Pegel ist.

16. Bildverstärkungsschaltung nach Anspruch 14, wobei die Ausgabeeinrichtung aufweist:

eine erste Auflistungseinrichtung (314) zum Auflisten der Bild-Abtastungs-Ausgabe durch den Bildspeicher (308) zu einem Grau-Pegel eines ersten Bereichs gemäß einer ersten Transformationsfunktion, die durch Verwendung der kumulativen Dichtefunktion definiert ist;

eine zweite Auflistungseinrichtung (316) zum Auflisten der Bild-Abtastungs-Ausgabe durch den Bildspeicher (308) zu einem Graupegel eines ersten Bereichs gemäß einer zweiten Transformationsfunktion, die durch Verwendung der kumulativen Dichtefunktion definiert ist;

einen Komparator (318) zum Vergleichen der Bild-Abtastungs-Ausgabe durch den Bildspeicher mit dem durchschnittlichen Pegel, um ein Auswahlsteuersignal zu erzeugen; und einen Selektor (320) zum Auswählen eines von Ausgabesignalen von der ersten Auflistungseinrichtung und der zweiten Auflistungseinrichtung gemäß dem Auswahlsteuersignal, wobei der Selektor das Ausgabesignal von der ersten Auflistungseinrichtung auswählt, wenn das Auswahlsteuersignal anzeigt, dass die Bild-Abtastungs-Ausgabe durch den Bildspeicher (308) gleich zu oder geringer als der durchschnittliche Pegel ist, und das Ausgabesignal von der zweiten Auflistungseinrichtung (316) auswählt, wenn das Auswahlsteuersignal anzeigt, dass die Bild-Abtastungs-Ausgabe durch den Bildspeicher (308) größer als der durchschnittliche Pegel ist.

## Revendications

1. Procédé pour améliorer une image en effectuant une égalisation d'histogramme d'un signal d'image représenté par un nombre prédéterminé de niveaux de gris, ledit procédé comportant les étapes consistant à :

   (a) obtenir une fonction de densité cumulée du signal d'image dans une demi-image ou trame,
   (b) calculer un niveau moyen du signal d'image dans une demi-image ou trame, et **caractérisé par** l'étape consistant à
   (c) égaliser le signal d'image en mappant chaque échantillon du signal d'image à un niveau de gris en utilisant une fonction de transformation qui utilise la fonction de densité cumulée pour napper chaque échantillon d'entrée du signal d'image à un niveau de gris conformément à des valeurs de la fonction de densité cumulée correspondant à l'échantillon d'entrée et au niveau moyen, dans lequel, la fonction de transformation mappe le niveau moyen en niveau identique.

2. Procédé pour améliorer l'image selon la revendication 1, comportant en outre une étape consistant à :

   (d) retarder le signal d'image d'une demi-image ou trame,

   dans lequel, un signal d'image retardé est égalisé à ladite étape (c).

3. Procédé selon la revendication 1, comportant en outre l'obtention d'une distribution de niveaux de gris du signal d'image dans une demi-image ou trame et l'obtention ensuite de la fonction de densité cumulée dans une demi-image ou trame sur la base de la distribution de niveaux de gris, et l'obtention d'une autre valeur de la fonction de densité cumulée correspondant au niveau moyen sur la base de la fonction de densité cumulée.

4. Procédé pour améliorer une image selon la revendication 3, comportant en outre une étape suivante consistant à : retarder le signal d'image d'une demi-image ou trame,
   dans lequel, un signal d'image retardé est égalisé à ladite étape de l'obtention de l'autre fonction de densité cumulée (c).

5. Procédé selon la revendication 1, dans lequel le procédé comporte en outre : l'obtention d'un niveau moyen compensé en ajoutant une valeur de compensation de luminosité au niveau moyen suivant le niveau moyen de l'image d'entrée, et l'égalisation du signal d'image en mappant chaque échantillon du signal d'image à un niveau de gris en utilisant une fonction de transformation qui utilise la fonction de densité cumulée, dans lequel, la fonction de transformation mappe le niveau moyen en niveau moyen compensé.

6. Procédé pour améliorer une image selon la revendication 5, comportant en outre l'étape consistant à : retarder le signal d'image d'une demi-image ou trame, dans lequel, un signal d'image retardé est égalisé à ladite étape d'égalisation du signal d'image.

7. Procédé selon la revendication 1, ledit procédé comportant en outre les étapes consistant à :

obtenir une distribution de niveaux de gris du signal d'image dans une demi-image ou trame et obtenir ensuite la fonction de densité cumulée dans une demi-image ou trame sur la base de la distribution de niveaux de gris,

(d) obtenir un niveau moyen compensé en ajoutant une valeur de compensation de luminosité au niveau moyen suivant le niveau moyen de l'image d'entrée, et

(e) égaliser le signal d'image en mappant chaque échantillon d'entrée du signal d'image à un niveau de gris conformément à des valeurs de la fonction de densité cumulée correspondant à l'échantillon d'entrée et au niveau moyen, dans lequel le niveau moyen est mappé en niveau moyen compensé.

8. Procédé pour améliorer une image selon la revendication 7, comportant en outre l'étape consistant à :

(f) retarder le signal d'image d'une demi-image ou trame,

dans lequel, un signal d'image retardé est égalisé à ladite étape (e).

9. Circuit d'amélioration d'image pour égaliser l'histogramme d'un signal d'image représenté par un nombre prédéterminé de niveaux de gris, ledit circuit comportant :

des premiers moyens de calcul (106 ; 206 ; 306 ; 406) pour calculer un niveau moyen d'un signal d'image d'entrée dans une demi-image ou trame,

des seconds moyens de calcul (102, 104 ; 202, 204 ; 302, 304 ; 402, 404) pour calculer une distribution de niveaux de gris du signal d'image dans une demi-image ou trame, calculer une fonction de densité cumulée dans une demi-image ou trame sur la base de la distribution de niveaux de gris, et délivrer en sortie une valeur de la fonction de densité cumulée correspondant à chaque échantillon d'entrée du signal d'image et une valeur de la fonction de densité cumulée du niveau moyen, et **caractérisé par**

des moyens de sortie (112, 114, 116, 118 ; 210 à 216 ; 314 à 320 ; 412 à 418) pour mapper l'échantillon d'entrée à un niveau de gris conformément à des valeurs de la fonction de densité cumulée correspondant à l'échantillon d'entrée et au niveau moyen et délivrer en sortie un niveau mappé en tant que signal égalisé, dans lequel le niveau moyen est mappé en niveau identique.

10. Circuit d'amélioration d'image selon la revendication 9, comportant en outre une mémoire d'images (108 ; 308) pour retarder le signal d'image d'une demi-image ou trame afin de fournir auxdits moyens de sortie (112 à 118 ; 314 à 320) un échantillon d'image qui appartient à une même trame que celle à partir de laquelle est calculée la fonction de densité cumulée.

11. Circuit d'amélioration d'image selon la revendication 9 ou 10, comportant en outre un tampon (110 ; 208 ; 310 ; 408) pour mémoriser la fonction de densité cumulée calculés par lesdits seconds moyens de calcul (102, 104 ; 202, 204 ; 302, 304 ; 402, 404), mettre à jour par une demi-image ou trame, et délivrer en sortie des valeurs de la fonction de densité cumulée correspondant à l'échantillon d'entrée et au niveau moyen.

12. Circuit d'amélioration d'image selon la revendication 9 ou la revendication 11 lorsqu'elle dépend de celle-ci, dans lequel lesdits moyens de sortie comportent :

un premier dispositif de mappage (210 ; 412) pour mapper l'échantillon d'entrée à un niveau de gris d'une première plage conformément à une première fonction de transformation qui est définie par l'utilisation de la fonction de densité cumulée,

un second dispositif de mappage (212 ; 414) pour mapper l'échantillon d'entrée à un niveau de gris d'une première plage conformément à une seconde fonction de transformation qui est définie par l'utilisation de la fonction de densité cumulée,

un comparateur (214 ; 416) pour comparer l'échantillon d'entrée au niveau moyen afin de générer un signal de commande de sélection, et

un sélecteur (216 ; 418) pour sélectionner l'un des signaux de sortie provenant dudit premier dispositif de mappage (210 ; 412) et dudit second dispositif de mappage (212 ; 414) conformément au signal de commande de sélection, dans lequel ledit sélecteur (216 ; 418) sélectionne le signal de sortie provenant dudit premier dispositif de mappage (210 ; 412) lorsque le signal de commande de sélection indique que l'échantillon d'entrée est inférieur ou égal au niveau moyen, et sélectionne le signal de sortie provenant dudit second dispositif de mappage (212 ; 414) lorsque le signal de commande de sélection indique que l'échantillon d'entrée est supérieur au niveau moyen.

**13.** Circuit d'amélioration d'image selon la revendication 10 ou 11 lorsqu'elle dépend de celle-ci, dans lequel lesdits moyens de sortie comportent :

un premier dispositif de mappage (112 ; 314) pour mapper l'échantillon d'image délivré en sortie par ladite mémoire d'images à un niveau de gris d'une première plage conformément à une première fonction de transformation qui est définie par l'utilisation de la fonction de densité cumulée,

un second dispositif de mappage (114 ; 316) pour mapper l'échantillon d'image délivré en sortie par ladite mémoire d'images (108 ; 308) à un niveau de gris d'une première plage conformément à une seconde fonction de transformation qui est définie par l'utilisation de la fonction de densité cumulée,

un comparateur (116 ; 318) pour comparer l'échantillon d'image délivré en sortie par ladite mémoire d'images (108 ; 308) au niveau moyen afin de générer un signal de commande de sélection, et

un sélecteur (118 ; 320) pour sélectionner l'un des signaux de sortie provenant dudit premier dispositif de mappage et dudit second dispositif de mappage conformément au signal de commande de sélection, dans lequel ledit sélecteur sélectionne le signal de sortie provenant dudit premier dispositif de mappage lorsque le signal de commande de sélection indique que l'échantillon d'image délivré en sortie par ladite mémoire d'images (108 ; 308) est inférieur ou égal au niveau moyen, et sélectionne le signal de sortie provenant dudit second dispositif de mappage lorsque le signal de commande de sélection indique que l'échantillon d'image délivré en sortie par ladite mémoire d'images (108 **;** 308) est supérieur au niveau moyen.

**14.** Circuit d'amélioration d'image selon la revendication 9, 10 ou 11 pour égaliser un histogramme, ledit circuit comportant en outre de plus,

des moyens de compensation de luminosité (312 ; 410) pour ajouter au niveau moyen une valeur de compensation de luminosité calculés par une fonction de compensation prédéterminée conformément au niveau moyen du signal d'image d'entrée pour délivrer en sortie un niveau moyen compensé et dans lequel lesdits moyens de sortie (314 à 320 ; 412 à 418) sont conçus pour mapper l'échantillon d'entrée à un niveau de gris conformément à des valeurs de la fonction de densité cumulée correspondant à l'échantillon d'entrée et au niveau moyen et délivrer en sortie un niveau mappé en tant que signal égalisé, dans lequel le niveau moyen est mappé en niveau moyen compensé.

**15.** Circuit d'amélioration d'image selon la revendication 14, dans lequel lesdits moyens de sortie comportent :

un premier dispositif de mappage (412) pour mapper l'échantillon d'entrée à un niveau de gris d'une première plage conformément à une première fonction de transformation qui est définie par l'utilisation de la fonction de densité cumulée,

un second dispositif de mappage (414) pour mapper l'échantillon d'entrée à un niveau de gris d'une première plage conformément à une seconde fonction de transformation qui est définie par l'utilisation de la fonction de densité cumulée,

un comparateur (416) pour comparer l'échantillon d'entrée au niveau moyen afin de générer un signal de commande de sélection, et

un sélecteur (418) pour sélectionner l'un des signaux de sortie provenant dudit premier dispositif de mappage (412) et dudit second dispositif de mappage (414) conformément au signal de commande de sélection, dans lequel ledit sélecteur sélectionne le signal de sortie provenant dudit premier dispositif de mappage (412) lorsque le signal de commande de sélection indique que l'échantillon d'entrée est inférieur ou égal au niveau moyen, et sélectionne le signal de sortie provenant dudit second dispositif de mappage (414) lorsque le signal de commande de sélection indique que l'échantillon d'entrée est supérieur au niveau moyen.

**16.** Circuit d'amélioration d'image selon la revendication 14, dans lequel lesdits moyens de sortie comportent :

un premier dispositif de mappage (314) pour mapper l'échantillon d'image délivré en sortie par ladite mémoire d'images (308) à un niveau de gris d'une première plage conformément à une première fonction de transformation qui est définie par l'utilisation de la fonction de densité cumulée,

un second dispositif de mappage (316) pour mapper l'échantillon d'image délivré en sortie par ladite mémoire d'images (308) à un niveau de gris d'une première plage conformément à une seconde fonction de transformation qui est définie par l'utilisation de la fonction de densité cumulée,

un comparateur (318) pour comparer l'échantillon d'image délivré en sortie par ladite mémoire d'images au niveau moyen afin de générer un signal de commande de sélection, et

un sélecteur (320) pour sélectionner l'un des signaux de sortie provenant dudit premier dispositif de mappage et dudit second dispositif de mappage conformément au signal de commande de sélection, dans lequel ledit

EP 0 801 360 B1

sélecteur sélectionne le signal de sortie provenant dudit premier dispositif de mappage lorsque le signal de commande de sélection indique que l'échantillon d'image délivré en sortie par ladite mémoire d'images (308) est inférieur ou égal au niveau moyen, et sélectionne le signal de sortie provenant dudit second dispositif de mappage (316) lorsque le signal de commande de sélection indique que l'échantillon d'image délivré en sortie par ladite mémoire d'images (308) est supérieur au niveau moyen.

17

# FIG. 1

# FIG. 2

# FIG. 3

FIG. 4A

FIG. 4B

FIG. 5A

FIG. 5B

# FIG. 6